Europäisches Patentamt

European Patent Office

Office européen des brevets

(19)

(11) Veröffentlichungsnummer: **0 202 583**
**A1**

## (12) EUROPÄISCHE PATENTANMELDUNG

(21) Anmeldenummer: **86106478.0**

(22) Anmeldetag: **13.05.86**

(51) Int. Cl.4: **G01F 1/66**

---

(30) Priorität: **21.05.85 DE 3518266**

(43) Veröffentlichungstag der Anmeldung:
**26.11.86 Patentblatt 86/48**

(84) Benannte Vertragsstaaten:
**AT BE CH DE FR GB IT LI NL SE**

(71) Anmelder: **Siemens Aktiengesellschaft Berlin und München**
**Wittelsbacherplatz 2**
**D-8000 München 2(DE)**

(72) Erfinder: **v. Jena, Alexander, Dr. Dipl.-Phys.**
**Oskar-von-Miller-Ring 29**
**D-8000 München 2(DE)**
Erfinder: **Magori, Valentin, Dipl.-Phys.**
**Limburgstrasse 17**
**D-8000 München 90(DE)**

---

(54) **Strömungsmesser.**

(57) Strömungsmesser (1, 11) in axiamsymmetrischer Ausführung mit elektroakustischen Wandlern - (10, 10a) und mit Auswertung der Phasendifferenz jeweils zweier Sende-Bursts (13, 13a), die in bzw. entgegengesetzt der Strömungsrichtung (12) ausgesendet werden. Die Meßstrecke wird durch eine Bohrung (8) gebildet, die sich in einem auswechselbaren Einsatzkörper (7) befindet.

FIG 1

FIG 2

## Strömungsmesser

Die vorliegende Erfindung bezieht sich auf einen Strömungsmesser nach dem Oberbegriff des Patentanspruches 1.

Aus dem Stand der Technik, so z.B. aus DE-PS 29 24 561, DE-OS 32 11 021, DE-OS 31 00 777 und DE-AS 26 48 718 sind für Flüssigkeiten zu verwendende Strömungsmesser bekannt, die mit Auswertung der Laufzeitdifferenz zweier in dem strömenden Medien entgegengesetzt laufender, akustischer Wellen arbeiten. In Richtung einer im Strömungsmesser speziell geführten Strömung der Flüssigkeit sind ein stromauf und ein stromab angeordneter Ultraschallwandler vorgesehen. Man läßt von diesen beiden Wandlern, insbesondere gleichzeitig, durch Anlegen eines jeweiligen Burst-Sendesignals je einen Ultraschallwellen-Impuls ausgehen, und zwar parallel zur Strömungsrichtung ausgerichtet. Der eine Ultraschall-Impuls läuft dann in Richtung der Strömung der Flüssigkeit und der andere Ultraschallimpuls läuft der Strömung entgegengesetzt. Nach Aussendung werden die Wandler auf Empfang umgeschaltet und der mit der Strömung laufende Ultraschallimpuls kommt früher an dem gegenüberliegenden Wandler an als der gegen die Strömung laufende Impuls. Die Laufzeitdifferenz ist ein Maß für die Strömungsgeschwindigkeit. Häufig ist diese Laufzeitdifferenz geringer als eine Periodendauer des Ultraschalls, so daß sich die Laufzeitdifferenz in einer Phasendifferenz zwischen den beiden Empfangssignalen auswirkt. Da der Querschnitt der Strömung gemessen bzw. festgelegt werden kann, läßt sich auf diese Weise auch die pro Zeiteinheit hindurchströmende Flüssigkeitsmenge bestimmen.

Der Aufbau bzw. die äußere Form dieser bekannten Strömungsmesser ist bedingt durch deren Innenaufbau derart, daß häufig Probleme hinsichtlich ihres Platzbedarfs und/oder insbesondere hinsichtlich ihres nachträglichen Einbaues bestehen.

Aufgabe der vorliegenden Erfindung ist es, eine konstruktive möglichst einfach Anordnung eines Strömungsmessers des bekannten Meßprinzips anzugeben. Dieser Strömungsmesser soll sich durch robusten Aufbau auszeichnen und insbesondere in einfacher Weise in betreffende Anlagen, insbesondere auch nachträglich, einbauen lassen. Die für seinen Herstellungspreis maßgebliche konstruktive Einfachheit soll derart sein, daß dieser Strömungsmesser insbesondere auch für die Anwendung zur gesetzlich vorgeschriebenen Wärmemengenmessung gegenüber sonstigen Wärmemengemessern nach Aufwand und Leistungsfähigkeit, insbesondere durch höhere Genauigkeit, konkurrenzfähig ist. Insbesondere soll dieser Strömungsmesser auch für Mikrodosierung realisierbar sein.

Diese Aufgabe wird mit einem Strömungsmesser nach Patentanspruch 1 gelöst und weitere Ausgestaltungen und Weiterbildungen gehen aus den Unteransprüchen hervor.

Strömungsmesser nach dem Anspruch 1 und nach den Unteransprüchen haben eine bezogen auf den Zulauf und auf den Ablauf wenigstens angenähert praktisch vollständig koaxialen Anordnung. Auf dieser zugrundeliegenden Basis läßt sich der erfindungsgemäß einfache konstruktive Aufbau realisieren. Es ist auch berücksichtigt, daß für eine große Anwendungsvielfalt unterschiedlich Querschnitte vorzusehen sind. Ohne daß das der Erfindung zugrundeliegende Prinzip zu variieren ist und/oder ohne daß kostspielige Änderungen durchzuführen sind, z.B. neue, druckfeste Gußteile für das Gehäuse herzustellen sind, kann für einen Strömungsmesser nach der Erfindung vorgesehen sein, daß sich die von Fall zu Fall bemessene Bohrung in einem solchen Körper befindet, der auswechselbar in der axialen Anordnung angebracht ist.

Weitere Erläuterungen der Erfindung gehen aus der nachfolgenden Beschreibung zu in den Figuren dargestellten Ausführungsbeispielen hervor, wobei diese Ausführungsbeispiele verschiedene bevorzugte Varianten eines erfindungsgemäßen Strömungsmessers umfassen.

Figur 1 zeigt eine auch Varianten umfassende erste Ausführungsform ines Strömungsmessers (Patentanspruch 2) und

Figur 2 zeigt eine auch Varianten umfassende zweite Ausführungsform eines Strömungsmessers (Patentanspruch 3).

Der Strömungsmesser 1 der hier dargestellten Ausführungsform umfaßt ein rohrförmiges Gehäuse 2. Hierzu gehört z.B. ein Stück eines (in Längsrichtung) geschweißten Rohres 2a. An seinen Enden kann dieses Rohr mit Außengewinde oder, wie dargestellt, mit jeweiligem Innengewinde versehen sein. In dieses Innengewinde sind axial Endstücke 3 und 4 für Zulauf und Ablauf, ausgebildet nach Art einer Reduzierung, eingeschraubt. Diese Endstücke 3, 4 bilden auch die Zulauf-und Ablaufanschlüsse. Mit 5 ist eine in dem Gehäuse 2 befindliche Hülse 5 bezeichnet, die auch als Distanzstück für das Einschrauben der Endstücke 3 und 4 dienen kann. Zum Beispiel kann je eine (an dem einen Ende angedeutete und mit 6 bezeichnete) O-Ring-Dichtung an beiden Enden vorgesehen sein.

In der Hülse 5 befindet sich ein Körper 7 mit einer axialen Bohrung 8. Diese Bohrung 8 ist der eigentliche Meßkanal des Strömungsmessers 1. Die Bemessung des Querschnitts und der Länge der Bohrung 8 richtet sich nach den jeweiligen Erfordernissen. Hierzu gehört insbesondere der vorgegebene Meßbereich und auch der zulässige im Strömungsmesser auftretende Druckabfall.

Mit 9 ist die jeweilige Querschnittsöffnung der Bohrung 8 bezeichnet. Mit 10 und 10a sind die insbesondere identisch ausgeführten Wandler bezeichnet. Mit deren Hilfe wird der burst-förmige Sendeimpuls erzeugt bzw. die akustische Welle an das die Bohrung 8 durchströmende Medium abgegeben. Der Wandler 10 bzw. 10a kann aber auch auf Empfang umgestellt werden, um diejenige akustische Welle zu empfangen, die die durch die Bohrung 8 hindurchströmende Flüssikeit durchlaufen hat. Mit dem Pfeil 12 ist die angenommene Strömungsrichtung des strömenden Mediums angedeutet. Mit den Pfeilen 13 bzw. 13a sind der jeweilige akustische Sendeimpuls des Wandlers 10 bzw. 10a bezeichnet. Mit 14 und 14a sind die entsprechenden, zu empfangenden Ultraschallimpulse angedeutet, die die durch die Bohrung 8 hindurchströmende Flüssigkeit durchlaufen haben. Bei der Strömungsrichtung 12 kommt (bei gleichzeitigem Aussenden der Sendeimpulse 13 und 13a) der Empfangsimpuls 14a gegenüber dem Eintreffen des Impulses 14 beim Wandler 10 zeitlich verzögert beim Wandler 10a an. Diese Zeitdifferenz ist das mit dem erfindungsgemäßen Strömungsmesser zu ermittelnde Maß für die Strömung des Mediums in der Bohrung 8. Die Länge L der Bohrung 8 wird im allgemeinen um ein Vielfaches größer als die Querabmessung, - (insbesondere Durchmesser) der Bohrung 8 bemessen. Insbesondere ist die Länge L auch groß gegenüber dem jeweiligen Abstand zwischen dem Wandler 10 bzw. dem Wandler 10a einerseits und dem gegenüberliegenden Öffnungsquerschnitt 9 der Bohrung 8 andererseits.

Mit 7a ist eine Variante der Kontur des Längsschnittes des Körpers 7 angedeutet.

Der Wandler 10 ist im wesentlichen eine Scheibe aus Piezokeramik, die entsprechend ausgebildete (hier der Übersichtlichkeit halber nicht dargestellte) Elektroden auf ihren Scheibenoberflächen besitzt. In dichtem Abstand vor der Querschnittsöffnung 9 der Bohrung 8 ist die Scheibe 110 des Wandlers 10 in der Hülse 5 gehalten. Gemäß einer Variante ist hierfür ein Streifen 210 aus einem Material vorgesehen, wie es z.B. für Dickschichtschaltungen verwendet wird. Es kann dies z.B. ein Streifen aus gesinterter Aluminiumoxid-Keramik, aus (elektrisch isolierend) emailliertem Metall und dgl. sein. Dieser Streifen 210 reicht zur Befestigung mit seinen beiden Enden bis zur Innenwand der Hülse 5. Seine (in der Figur nicht dargestellte) Breite ist jedoch erheblich geringer als der Innendurchmesser der Hülse 5 und ggf. auch schmaler als der Durchmesser der Wandlerscheibe 110. Damit stellt dieser der Halterung des Wandlers 10 dienende Streifen 210 keinen nennenswerten Strömungswiderstand für das den Strömungsmesser 1 durchströmende Medium dar. Dieser Streifen 210 trägt zum Anschluß der Wandlerscheibe dienende, in Dickschichttechnik ausgeführte Leiterbahnen.

Eine Variante der Befestigung des Wandlers ist für den Wandler 10a dargestellt. Seine Keramikscheibe 110, die z.B. mit einem Metallrand 310 eingefaßt ist, wird durch eine nach Art einer Spinne ausgebildete Halterung mit z.B. drei Streben 410 - (von denen zwei der im Winkel von 120° zueinander angeordnete Streben dargestellt sind) gehalten. Diese Streben sind vorzugsweise wiederum mit der Hülse 5 verbunden. Auch diese Streben 410 stellen kein Strömungshindernis dar.

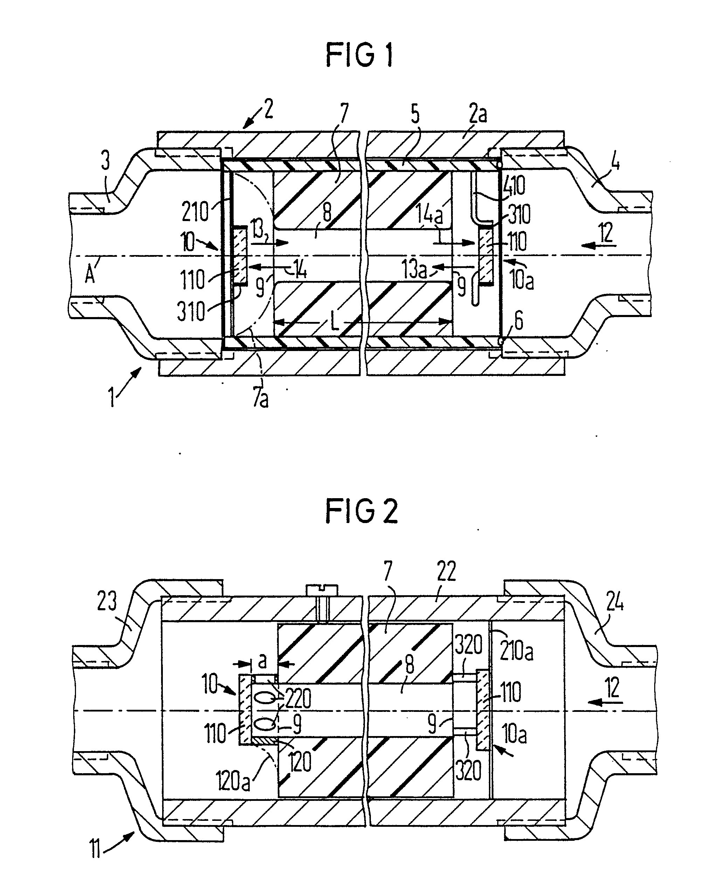

Eine andere, sehr vorteilhafte Ausführungsform 11 ist in Figur 2 dargestellt. Das Gehäuse 22 wird wiederum durch ein rohrförmiges Teil 22a mit Endstücken 23 und 24 gebildet. Das Teil 22a kann wiederum ein Nippel mit beispielsweise Außengewinde sein und als Endstücke 23, 24 sind als Fittings erhältliche Reduzierungen verwendet. Wiederum mit 7 ist der mit der Bohrung 8 versehene, einen Einsatz im Rohr 22a bildende Körper bezeichnet. Auch die Wandler sind wiederum mit 10 und 10a bezeichnet, da sich diese Wandler auch bei der Ausführungsform 11 in ihrer Eigenschaft und Zweckbestimmung von denen der Ausführungsform 1 nicht unterscheiden. Bei der Ausführungsform 11 der Figur 2 sind jedoch zwei andere Ausgestaltungen der Halterung der Wandler 10 und 10a dargestellt, und diese Ausgestaltungen können wahlweise verwendet werden. Mit 120 ist ein am Körper 7 wie dargestellt vorgesehener Kragen bezeichnet, der eine Anzahl umfangsmäßig verteilte, quer zur Achse gerichtete Bohrungen 220 aufweist. Diese Bohrungen dienen als Durchlaß für das in dem Strömungsmesser 11 strömende Medium. Ihre Vielzahl ermöglicht es, die (in Längsrichtung der Bohrung 8 gemessene) Entfernung a zwischen der Stirnseite des Körpers 7 und der Anordnung der Scheibe 110 des Wandlers 10 sehr klein, insbesondere um ein Mehrfaches kleiner als eine Längenabmessung (z.B. Durchmesser) des

Querschnitts der Bohrung 8 zu bemessen. Bei der Ausführungsform 11 kann daher die Länge L - (vergleichsweise zur Ausführungsform 1) bei gleichem Querschnitt der Bohrung 8 verhältnismäßig kurz bemessen werden, ohne daß die Meßgenauigkeit verringert ist.

Es sei der Vollständigkeit halber erwähnt, daß die Bohrungen 220 auch etwas schräg gerichtet sein können und daß alternativ auch eine äußere Kontur des die Stützhalterung bildenden Kragens 120 vorgesehen sein kann, die in der Figur 2 mit 120a angedeutet ist.

Eine entsprechend günstige Stützhalterung ist für die Scheibe 110 des Wandlers 10a in Figur 2 dargestellt. Die Wandlerscheibe 110 ist dort mit z.B. drei in entsprechender Verteilung angeordneten Stützen 320 gehaltert. Die Scheibe 110 ist wiederum in entsprechend geringem Abstand vor der Querschnittsöffnung 9 der Bohrung 8 gehalten, so daß das strömende Medium in die Bohrung 8 gelangen kann.

Mit 210a is wiederum ein zur Figur 1 bereits beschriebener (dort mit 210 bezeichneter) Streifen dargestellt. Dieser Streifen 210a dient wiederum dazu, die nach Dickschichttechnik ausgeführten Leiterbahnen zum Anschluß der Elektroden der Wandlerscheibe 10 zu tragen. Bei der Ausführungsform 11 braucht dieser Streifen 210 jedoch keine halternde Funktion auszuüben, da hierzu die Stützen 320 ausreichend stabil sind.

Insbesondere die Ausführungsform 11 eines erfindungsgemäßen Strömungsmessers zeichnet sich durch besonders einfache Auswechselbarkeit aus, nämlich durch die Möglichkeit der problemlosen Anpassung (insbesondere hinsichtlich der LÄnge der Bohrung) an unterschiedliche Betriebsbedingungen aus. Der Körper 7 und das Gehäuse, d.h. dessen Rohr 22, können so bemessen sein, daß in einfacher Weise durchzuführendes Auswechseln vorgenommen werden kann. Der Körper 7 mit seiner Bohrung 8 und die Wandler 10, 10a sind fest zueinander ausgerichtet angeordnet. Die Halterung des Körpers 7 im Rohr 22 kann durch eine quer gerichtete Klemmschraube (nicht dargestellt) bewirkt werden. Wird auf die Austauschbarkeit der im Strömungsmesser enthaltenen Bohrung verzichtet, kann dieser Körper 7 auch einstückiger Bestandteil des Rohres des Gehäuses (2, 22) sein.

Ein erfindungsgemäßer Strömungsmesser läßt sich auch zur Verwendung für Microdosierung in der Prozeßtechnik dimensionieren. Z.B.läßt sich bei 2,5 mm Durchmesser und 20 mm Länge L der Bohrung 8 (und entsprechend schnell arbeitenden Ventilen die minimale Dosierungsmenge bis herab

zu 1 mm³ bemessen. Man verwendet dabei eine Burst-Folgefrequenz von z.B. 10 kHz und führt bzw. wertet zehn Messungen aus, für die 1 ms benötigt werden.

Ein erfindungsgemäßer Strömungsmesser läßt sich wegen seiner Meßgenauigkeit vorteilhaft auch zur Treibstoff-(Benzin-)Mengenmessung bzw. -Dosierung in modernen Kraftfahrzeugen verwenden.

Die an einen erfindungsgemäßen Strömungsmesser anzuschließende elektronische Auswerteschaltung ist in ihrem Aufbau an sich bekannt.

Die untere Grenze der Meßbarkeit liegt bei bereits ganz kleiner Phasendifferenz. Je nach Stetigkeitsbereich des verwendeten Phasendiskriminators der Auswerteschaltung liegt (für Phasendifferenzmessung) die obere Grenze bei angenähert kleiner 180° oder 360° Phasendifferenz. Dies ist für die Bemessung der Bohrung für vorgegebenen Mengenbereich der strömenden Flüssigkeit zu berücksichtigen.

**Ansprüche**

1. Strömungsmesser für Flüssigkeiten mit Auswertung der Laufzeitdifferenz zweier in der strömenden Flüssigkeit zueinander entgegengesetzt laufender akustischer Wellen (13, 14), mit einem Gehäuse (2) mit rohrförmigem Anteil (2a, 22a) mit einem im Gehäuse befindlichen Körper - (7) mit einer Bohrung (8) für den Durchlaß der Flüssigkeit, mit vor den Querschnitten (9) dieser Bohrung (8) gehaltert angeordneten Wandlern (10, 10a) und mit in einer Achse zueinander liegendem Zulauf und Ablauf, wobei zwischen den Abstrahlflächen der Wandler die Meßstrecke besteht; und diese Wandler sowohl als Sender als auch als Empfänger benutzt werden,

**gekennzeichnet dadurch,**

-daß das Gehäuse (2, 22) des Strömungsmessers - (Fig. 1,2) als ein Rohr (2a, 22a) mit einer Achse - (A) und mit dazu axialem (A) Zulauf und Ablauf (3, 4; 23, 24) ausgebildet ist, und

-daß diese durch die Bohrung (8) in dem Körper - (7) gebildete Meßstrecke und die Achse (A) dieses Rohres (2a, 22a) nach Richtung und Lage zusammenfallen (Fig. 1, 2).

2. Strömungsmesser nach Anspruch 1,

**gekennzeichnet dadurch,**

daß diese Wandler (10, 10a) getrennt von diesem Körper (7) mittels einer jeweiligen Halterung (210; 410) gehaltert sind (Fig. 1).

3. Strömungsmesser nach Anspruch 1,

**gekennzeichnet dadurch,**

daß am Körper (7) mit der Bohrung (8) in Richtung der Bohrung (8) vorspringende Stützen (320) für die Halterung der Wandler (10, 10a) vorgesehen sind.

4. Strömungsmeser nach Anspruch 1, 2 oder 3,

**gekennzeichnet dadurch ,**

daß der Körper (7) austauschbar im Gehäuse (2, 22) gehaltert ist.

5. Strömungsmesser nach Anspruch 2 oder 3,

**gekennzeichnet dadurch,**

daß der Körper ein Teil des Gehäuses (2, 22) ist.

6. Strömungsmesser nach Anspruch 1, 3, 4 oder 5,

**gekennzeichnet dadurch,**

daß im Inneren des Gehäuses eine den Körper (7) umgebende Hülse (5) vorgesehen ist und die jeweilige Halterung (210, 410) an dieser Hülse befestigt ist.

7. Strömungsmesser nach Anspruch 1, 3, 4, 5 oder 6,

**gekennzeichnet dadurch,**

daß diese Halterung ein Trägerstreifen (210) ist.

8. Strömungsmesser nach Anspruch 3, 4 oder 5,

**gekennzeichnet dadurch ,**

daß die Stützhalterung ein Kragen (120) ist, der die Querschnittsöffnung (9) der Bohrung (8) des Körpers (7) umgebend an dem Körper (7) befestigt ist, wobei dieser Kragen eine Anzahl Querbohrungen (220) für den Durchtritt der strömenden Flüssigkeit aufweist und wobei die den Abstand (a) zwischen dem Körper (7) und dem Wandler (10) ergebende Abmessung der Höhe dieses Kragens (120) klein gegenüber einer Längenabmessung (Durchmesser) der Bohrung (8) bemessen ist.

9. Strömungsmesser nach Anspruch 3, 4 oder 5,

**gekennzeichnet dadurch,**

daß die Stützen (320) die Wandler in einem vergleichsweise zu einer Längenabmessung (Durchmesser) des Querschnitts (9) der Bohrung (8) geringen Abstand vor der Querschnittsöffnung (9) der Bohrung (8) des Körpers (7) haltern.

## FIG 1

## FIG 2

| | **EINSCHLÄGIGE DOKUMENTE** | | EP 86106478.0 | |
|---|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) | |
| X | <u>DE - A - 2 339 631</u> (SARATOGA) <br> * Fig. 1,2 * <br><br> -- | 1,2,5, 9 | G 01 F 1/66 | |
| X | <u>EP - A2 - 0 078 381</u> (PERKIN-ELMER) <br><br> * Seite 3, letzter Absatz - Seite 5, 1. Absatz; Fig. * <br><br> -- | 1,2 | | |
| X | <u>US - A - 4 003 252</u> (DEWATH) <br> * Fig. 2 * <br><br> ---- | 1 | | |
| | | | RECHERCHIERTE SACHGEBIETE (Int. Cl.4) | |
| | | | G 01 F 1/00 | |
| Der vorliegende Recherchenbericht wurde für alle Patentansprüche erstellt. | | | | |
| Recherchenort | Abschlußdatum der Recherche | | Prüfer | |
| WIEN | 01-09-1986 | | BURGHARDT | |